# EUROPEAN PATENT SPECIFICATION

(11) **EP 1 231 471 B1**
(45) Date of publication and mention of the grant of the patent: **28.04.2010**
(21) Application number: 01120565.5
(22) Date of filing: 29.08.2001
(51) Int. Cl.: G01N 35/00

(54) **Method managing consumer goods used in an analyser**
Verfahrenssteuerung von Konsumgütern, die in einem Analysegerät verwendet werden
Procédé pour gérer des produits de consommation utilisés dans un analyseur

(30) Priority: 02.02.2001 JP 2001026298
(43) Date of publication of application: 14.08.2002
(73) Proprietor: Hitachi, Ltd., Chiyoda-ku, Tokyo 100-8010 (JP)
(72) Inventor: Nishida, Masaharu, Tokyo 171-0051 (JP); Mitsumaki, Hiroshi, Mito-shi, Ibaraki 310-0851 (JP); Sato, Takeshi, Hitachinaka-shi, Ibaraki 312-0033 (JP)
(74) Representative: Strehl Schübel-Hopf & Partner

(56) References cited:
- EP-A2- 0 871 034
- WO-A-00/29999

## Description

### BACKGROUND OF THE INVENTION

The present invention relates to a method for managing consumer goods used in an analyzer installed in a laboratory where clinical laboratory tests are conducted.

Japanese Application Patent Laid-open Publication No. Hei 10-10132 has disclosed the details of an automatic analyzer that facilitates a classification process of printed measurement results and increases efficiency in information management in a laboratory office.

Japanese Application Patent Laid-open Publication No. Hei 8-94626 has disclosed an automatic analyzer, which comprises vessels which have a one-dimensional barcode assigned to each of them that stores an identification code and lot number of a calibrator or a control sample contained therein, reagent bottles which have a two-dimensional barcode assigned to each of them that stores information on the calibrator or the control sample and reagent information, a barcode reader which reads each barcode of said vessels and said reagent bottles, and a memory unit which links barcode information that has been read from said vessels and said reagent bottles and registers the information.

In regard to a conventional analyzer used for clinical laboratory tests, a user of the analyzer places an order for a necessary quantity of consumer goods from appropriate consumer goods suppliers based on an inventory quantity of the consumer goods.

Said suppliers supply consumer goods to the user of the analyzer, every time the user of the analyzer places an order for the consumer goods.

In regard to said conventional analyzer, a user of the analyzer manages necessary consumer goods; therefore, there is a possibility that he or she may by mistake forget to place an order for the necessary consumer goods.

In particular, when it is necessary to place an order for consumer goods from a plurality of suppliers, there are more possibilities that human error can take place.

In addition, in some cases, to easily contact a plurality of consumer goods suppliers, a user of an analyzer (analyzer administrator) uses an agent that is assigned to negotiate with a plurality of consumer goods suppliers to place an order for and purchase consumer goods; however, to use an agent, agent's cost and brokerage fees have to be added to the cost of the purchased consumer goods; and as a result, purchasing consumer goods is costly.

WO 00/29999 A discloses an inventory management system and method using amount indicates for automatical placing of inventory orders.

### SUMMARY OF THE INVENTION

The main purpose of the present invention is to provide a method which prevents order loss from occurring due to an analyzer user's human error and also enable consumer goods required by the user of the analyzer to be purchased at cheaper prices by using electronics media typified by a telephone line so that the number of tests per item and consumption status of consumables that have been analyzed by the analyzer can automatically be transmitted to consumer goods suppliers.

In order to realize the above purpose, an apparatus for carrying out the method of the present invention consists of means for recording information of consumer goods consumed by an analyzer, means for sorting consumption information of said consumer goods by consumer goods supplier, means for transmitting the consumer goods information sorted according to consumer goods supplier to appropriate consumer goods suppliers, electronics data transmission media typified by a telephone line, and single or a plurality of consumer goods suppliers who are equipped with means for receiving said information.

In the present invention, reagent, standard solution, quality control samples and consumables consumed by an analyzer are called "consumer goods", and "reagent" is used when reagent, standard solution, and quality control samples are generically called for.

On the above premise, substantially, the present invention provides the method defined in claim 1. Further advantageous features are set out in dependent claim 2.

### BRIEF DESCRIPTION OF DRAWINGS

FIG.1 is a schematic diagram which illustrates a method of placing an order for and supplying consumer goods used in an analyzer in accordance with the present invention.
FIG.2 is a screen configuration of an information management unit.
FIG.3 is a screen configuration of a reagent supplier's management unit.
FIG.4 is a schematic diagram which illustrates a method of placing an order for and supplying consumer goods used in an analyzer by way of other examples.
FIG.5 is a schematic diagram which illustrates a method of placing an order for and supplying consumer goods used in an analyzer by way of other examples.

### DETAILED DESCRIPTION OF THE PREFERRED EMBODIMENTS

An embodiment of the present invention will be described in detail below, referring to drawings.

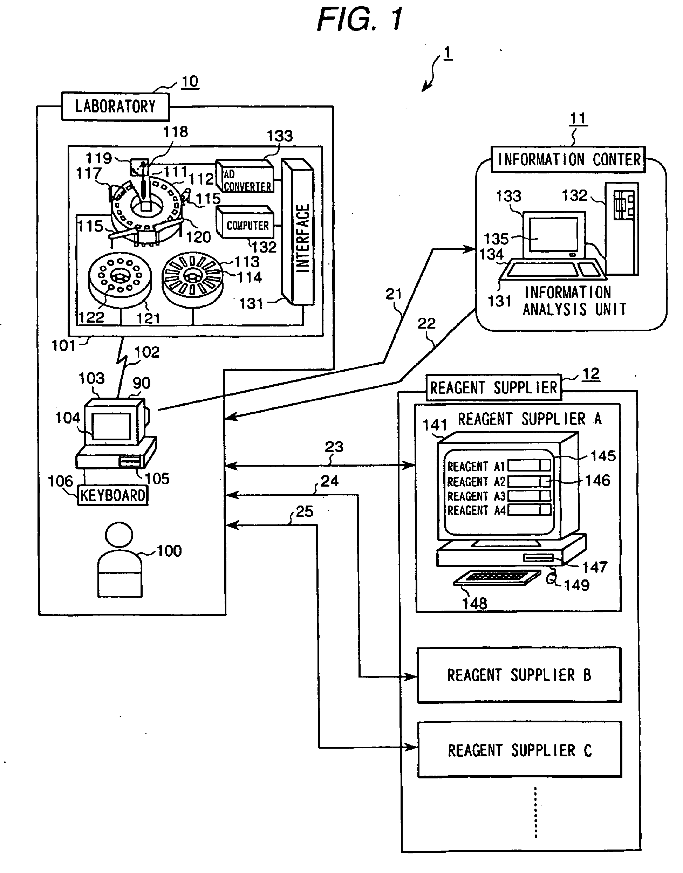

FIG.1 is a schematic diagram that illustrates a method of placing an order for and supplying consumer goods used in an analyzer, which is a first embodiment of the present invention. Explanation will be given by taking reagent as an example. Accordingly, reagent can be read as consumer goods.

As shown in the drawing, a laboratory 10, which is equipped with an analyzer 101, is connected with an information center 11 and reagent suppliers 12 via data transmission media 21, 22, 23, 24 and 25 that form networks. Both wired and wireless communications are available for the network connection.

An analyzer administrator (a user of an analyzer) 100 who uses and manages the analyzer 101 is assigned to the laboratory 10.

The analyzer 101 is connected to an information management unit 90 via a communication line 102. The information management unit 90 is equipped with an operating section 103 that operates the analyzer and conducts information management, a display 104, a memory unit 105, and a keyboard 100.

The analyzer 101 comprises a reaction disc 111, a plurality of reaction vessels 112 mounted on the disc's concentric circumference, a reagent disc 113, a plurality of reagent bottles 114 filled with various reagent which are mounted on the reagent disc's concentric circumference, a sample dispensing probe 115, an agitator 116, a cleaner 117, a light source 118, and a multi-wavelength photometer 119 which are disposed in the vicinity of the reaction disc 111, a reagent dispensing probe 120 disposed between the reaction disc 111 and the reagent disc 113, a sample disc 121 disposed on the rotating circumference of the reagent dispensing probe 120 and also located next to the reagent disc 113, and sample vessels 122 that contain samples.

All mechanical operations of those pieces of equipment are controlled by a computer 132 via a communication circuit 102 and an interface 131.

In addition, measurement results obtained by the multi-wavelength photometer 119 are transmitted to the interface 131 via an A/D converter 133, input into the information management unit 90 via the communication line 103 to be analyzed and made use of for a variety of purposes.

In FIG.1, information on consumer goods used in the analyzer 101 is recorded by a recorder 105. Consumption information of said consumer goods that has been recorded by the recorder 105 is sorted according to consumer goods supplier by built-in means for sorting information. Consumer goods information that has been sorted according to consumer goods supplier is transmitted to an information center 11 by transmission means of the information management unit 90 via data transmission media 21, for example, a telephone line.

The information center 11 is equipped with an information analysis unit 131. The information analysis unit 131 comprises database 132, an operating section 133, a keyboard 134 and a screen 135.

The database 132 collects data on an analyzer installed in each laboratory, consumer goods used therein, reagent suppliers, and consumer goods that are supplied. Accordingly, in place of the information management unit 90, an information analysis unit 131 can sort information according to consumer goods supplier by the built-in information sorting means based on consumer goods consumption information that has been recorded by the recorder 105.

The information analysis unit 131 analyzes information based on consumption information obtained from an information management unit 90 as well as future consumption information, such as planned analysis methods or the number of analyses, and analyzes consumption status, inventory, consumption trends and predicted dates of complete consumption of consumer goods stored in the analyzer 101. This analysis is conducted according to both reagent supplier and reagent, and the results are recorded in the database 132 as supply information, such as supply date, supply quantity, etc., together with the analytical results, and then transmitted to a laboratory 10, for example, an information management unit 90, via data transmission media 22. The results can be transmitted to other management units.

An analyzer administrator 100 places an order for each reagent from reagent suppliers 12 (i.e. reagent suppliers A, B, and C), based on analysis information and supply information transmitted from an information center 11. When using a conventional analyzer, the analyzer administrator 100 has to conduct an inventory check to place an order as one of daily tasks; however, this new system enables the administrator to easily place an order for reagent by using information transmitted from the information center 11.

The reagent order that has been placed by the analyzer administrator 100 that uses the information management unit 90 is transmitted to management units 141 owned by reagent suppliers A, B, and C that deal in the selected reagent via data transmission media 23, 24, and 25 and then the order data is stored in the management units.

The management unit 141 comprises an operating section 145, a screen 146, a memory unit 147, a keyboard 148, and a mouse 149.

Reagent a1, a2, a3, and a4 are displayed on the screen 146 together with their supply dates, supply quantities and prices, and the supply information is recorded in the memory unit 147.

The management unit 141 instructs supply task for a person in charge and also transmits supply status information to a laboratory 10, for example, an information management unit 90, and then an analyzer administrator 100 will confirm the supply results and input the data.

In the above manner, reagent for which an order has been placed can be timely supplied by reagent suppliers.

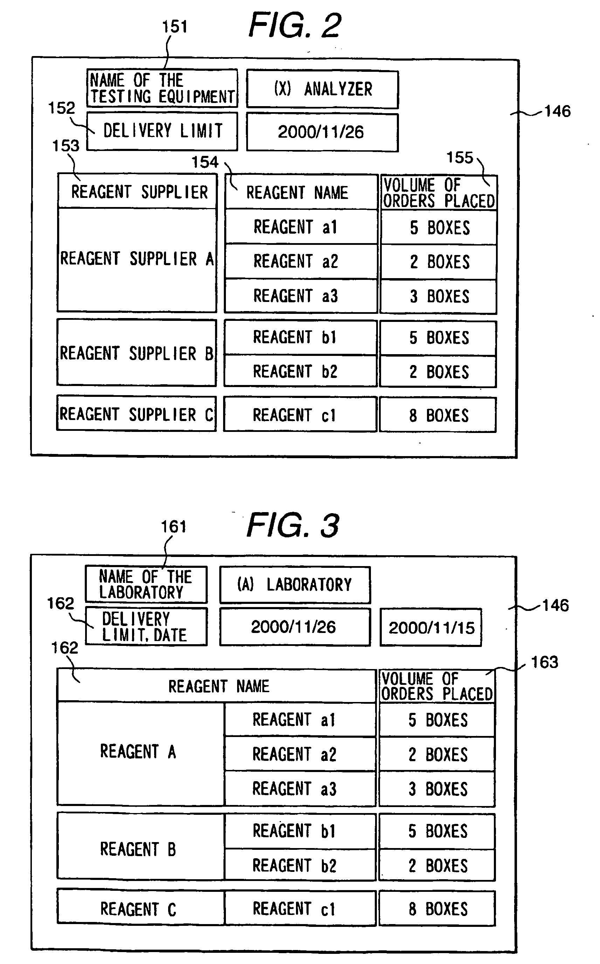

FIG.2 shows one example of a screen displayed on a display 146. The name of the testing equipment 151, delivery limit 152, reagent suppliers 153, reagent name 154, and the volume of orders placed 155 are displayed.

FIG.3 shows one example of a screen displayed on the display 146. The name of the laboratory 161, delivery limit date 162, reagent name 163, and injection quantity 164 are displayed.

A user specifies parameters required for measurements, registers samples, and confirms analytical results on the screen (CRT).

Some reagent bottles have a barcode attached to the side of each bottle, but not all. The reagent barcode stores data on reagent bottle identification information, reagent lot number, expiration date, etc. When a reagent barcode reader (not shown) is attached, for example, when a lid of a reagent disc 113 is closed, the barcode reader reads the barcodes of all reagent bottles located on the reagent disc and registers the reagent bottle information that corresponds to each position of a bottle. On the other hand, when a bottle does not have a barcode pasted on it, a user registers reagent bottle information by manually entering information, which would be normally stored in a barcode if the bottle had a barcode attached, from an operating section 103. The reagent bottle information consists of type of reagent, lot number, expiration date, remaining quantity of reagent, etc. Testing items that can be analyzed are specified according to reagent placed on the reagent disc 113, and analysis parameters that define analytical conditions are required. Other methods of specifying analysis parameters are also available such as a method of manually entering necessary parameters for a specified testing item from an operating section 103, or a method of reading data from a floppy disc or a bar sheet.

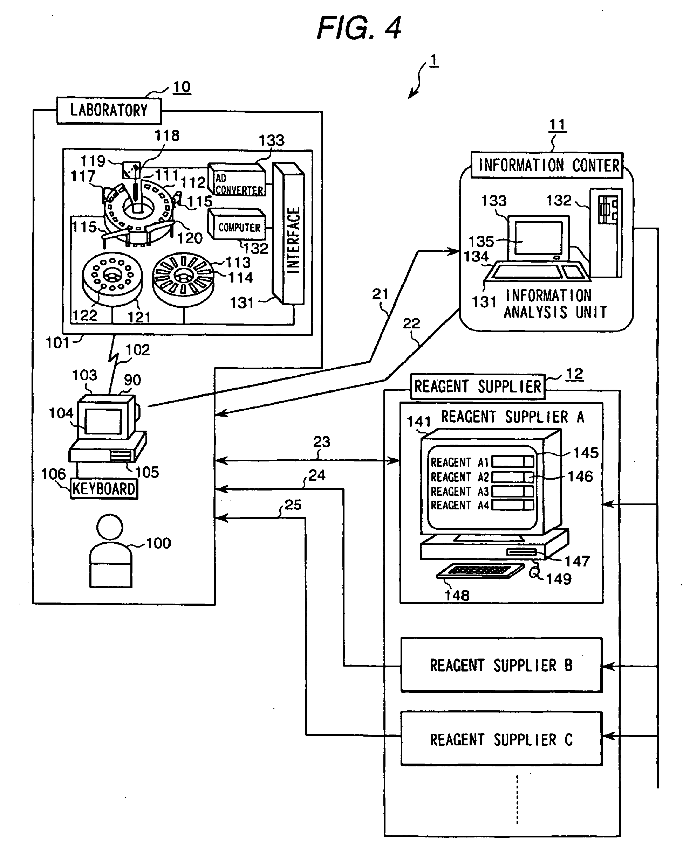

FIG.4 shows a second embodiment of the present invention. Repeated explanation will be avoided by assigning the same numbers to the same components that appeared in a first embodiment shown in FIG.1. Mainly, explanation will be made about new components.

In this embodiment, an analyzer administrator 100 transmits information on use status and planned use of reagent, which has been obtained by an information management unit 90, to an information center 11 via data transmission media 21, which is the same as the first embodiment; however, what is different is that an order is placed for reagent from the information center 11 by the analyzer administrator 100 via data transmission media 31. Prior to this order, information that includes analytical results, etc. is transmitted to the information management unit 90, which is the same as the first embodiment.

The information center 11 which has received the order information places an order for reagent from reagent suppliers A, B, and C via data transmission media 32. A reagent supplier that has received an order will deliver said reagent to the laboratory 10 and also transmits delivery information to an information management unit 90 via data transmission media 23, 24, and 25.

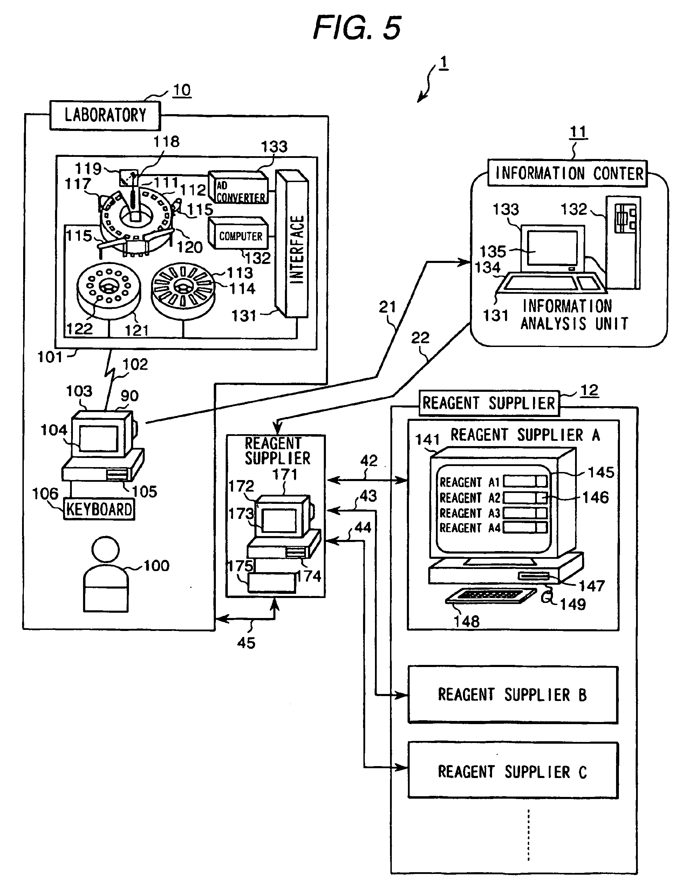

FIG.5 shows a third embodiment of the present invention. Repeated explanation will be avoided by assigning the same numbers to the same components that appeared in a first embodiment shown in FIG.1. Mainly, explanation will be made about new components.

An analyzer administrator 100 places an order for reagent from a reagent vendor (reagent delivery agent) 170 by using an information management unit 90. The reagent vendor 170 is an agent that intermediates between an analyzer administrator 100 and reagent suppliers 12. The reagent vendor 170 owns a management unit 171, which comprises an operating section 172, a screen 173, a memory unit 174, and a keyboard 175, as is other management units.

Information that includes analytical results, etc. obtained from an information analysis unit 131 is transmitted to a management unit 171 owned by a reagent vendor 170 via data transmission media 41.

A reagent vendor 170 uses its management unit 171 to place an order for reagent from reagent suppliers A, B, and C according to each reagent via data transmission media 42, 43, and 44.

Each reagent supplier delivers reagent to the reagent vendor 170 and also transmits delivery information.

The reagent vendor 100 delivers the reagent for which an order has been placed to a laboratory 10 and transmits supply information to an information management unit 90 via data transmission media 45.

Next, payment request by an information center 11 in the above examples will be explained.

The payment for analyzing information obtained from an information management unit 90 and creating supply information is requested from a laboratory 10, reagent suppliers 12 and/or a reagent vendor 170 in accordance with other contracts. Those procedures are processed by the information management unit 90, an information analysis unit 131, reagent suppliers' management units 141, and a reagent vendor's management unit 170.

As explained above, the present invention enables a user of an analyzer to save time when placing an order and also to reliably place an order for consumer goods; and consumer goods suppliers can supply consumer goods at the right time.

## Claims

1. A method for managing a reagent used in an analyzer, comprising the steps of:
receiving transmitted information related to the consumption status of the reagent consumed by the analyzer and monitoring the consumption status of the reagent;
analyzing, by means of an information analysis unit, the consumption status of the reagent used in the analyzer both in correspondence to suppliers of the reagent and in correspondence to the reagent that said reagent suppliers deal in, based on a consumption schedule of the reagent consumed in the analyzer depending on the consumption status and scheduled analyses; and
transmitting the analyzed reagent consumption status or supply management information based on said reagent consumption status to a management unit for the analyzer, to reagent suppliers' supply management units or to a supply management unit for a consumer goods vendor that intermediates between a management unit for the analyzer and reagent suppliers.

2. The method of claim 1, further comprising the steps of:
confirming the supply status based on the reagent supply management information; and
requesting payment from an analyzer administrator, reagent suppliers or a reagent vendor in consideration of the information acquired in the steps of monitoring and analyzing the consumption status.

## Patentansprüche

1. Verfahren zum Verwalten eines in einer Analysevorrichtung verwendeten Reagens, umfassend die folgenden Schritte:
Empfangen von übertragenen Informationen, die sich auf den Verbrauchszustand des von der Analysevorrichtung verbrauchten Reagens beziehen, und Überwachen des Verbrauchsstatus des Reagens;
Analysieren, mittels einer Informationsanalyseeinheit, des Verbrauchsstatus des in der Analysevorrichtung verwendeten Reagens sowohl in Bezug auf Zulieferer des Reagens als auch in Bezug auf das Reagens, mit dem die Reagenszulieferer handeln, auf der Grundlage eines Verbrauchsplans des in der Analysevorrichtung verbrauchten Reagens in Abhängigkeit von Verbrauchszustand und geplanten Analysen; und
Übertragen des analysierten Reagensverbrauchsstatus oder von Zulieferungsverwaltungsinformationen auf der Grundlage des Reagensverbrauchsstatus an eine Verwaltungseinheit für die Analysevorrichtung, an Zulieferungsverwaltungseinheiten der Reagenszulieferer oder an eine Zulieferungsverwaltungseinheit für einen Verbrauchsgüterverkäufer, der zwischen einer Verwaltungseinheit für die Analysevorrichtung und Reagenszulieferern vermittelt.

2. Verfahren nach Anspruch 1, ferner umfassend die folgenden Schritte:
Bestätigen des Zulieferungszustands auf der Grundlage der Reagenszulieferungsverwaltungsinformationen; und
Auffordern von einem Administrator der Analysevorrichtung, von Reagenszulieferern oder von einem Reagensverkäufer zur Zahlung in Betracht der Informationen, die beim Überwachen und Analysieren des Verbrauchszustands erhalten worden sind.

## Revendications

1. Procédé pour gérer un réactif utilisé dans un analyseur, comportant les étapes consistant à :
recevoir des informations transmises associées à l'état de consommation du réactif consommé par l'analyseur et surveiller l'état de consommation du réactif,
analyser, par l'intermédiaire d'une unité d'analyse d'informations, l'état de consommation du réactif utilisé dans l'analyseur à la fois par rapport à des fournisseurs du réactif et par rapport au réactif que les fournisseurs de réactif distribuent, sur la base d'un programme de consommation du réactif consommé dans l'analyseur en fonction de l'état de consommation et des analyses programmées, et
transmettre l'état de consommation du réactif analysé ou des informations de gestion d'approvisionnement sur la base dudit état de consommation de réactif à une unité de gestion pour l'analyseur, à des unités de gestion d'approvisionnement de fournisseurs de réactif ou à une unité de gestion d'approvisionnement pour un vendeur de biens de consommation qui est un intermédiaire entre une unité de gestion pour l'analyseur et des fournisseurs de réactif.

2. Procédé selon la revendication 1, comportant en outre les étapes consistant à :
confirmer l'état d'approvisionnement sur la base des informations de gestion d'approvisionnement en réactif, et
demander le paiement d'un administrateur de l'analyseur, de fournisseurs du réactif ou d'un vendeur du réactif en tenant compte des informations acquises aux étapes de surveillance et d'analyse de l'état de consommation.
